# EUROPÄISCHE PATENTSCHRIFT

(11) **EP 0 974 812 B1**
(45) Veröffentlichungstag und Bekanntmachung des Hinweises auf die Patenterteilung: **18.02.2004**
(21) Anmeldenummer: 99113926.2
(22) Anmeldetag: 16.07.1999
(51) Int. Cl.: G01D 5/24

(54) **Einrichtung zur Erfassung von Etiketten auf einem Träger**
Device for detecting labels on a base
Dispositif pour détecter des étiquettes sur un support

(30) Priorität: 18.07.1998 DE 19832434
(43) Veröffentlichungstag der Anmeldung: 26.01.2000
(73) Patentinhaber: Rechner Industrie-Elektronik GmbH, 68623 Lampertheim (DE)
(72) Erfinder: Pok, Ulrich, 06122 Halle (DE)
(74) Vertreter: Zinngrebe, Horst, Dr.rer.nat.

(56) Entgegenhaltungen:
- DE-C- 19 521 129

## Beschreibung

Die Erfindung betrifft eine Einrichtung zur Erfassung von elektrisch wirksamen Unregelmäßigkeiten an oder in einem insbesondere bandförmigen Gegenstand, mit einem kapazitiven Sensor, bei welchem an einer Seite eines Spaltes zum Durchführen des Gegenstandes in einer Ebene zwei gegeneinander elektrisch isolierte flächige Erfassungselektroden und auf der gegenüberliegenden Seite des Spaltes eine flächige Gegenelektrode angeordnet sind, wobei an die Erfassungselektroden und an die Gegenelektrode eine Auswerteschaltung angeschlossen ist, sowie einen für diese Einrichtung geeigneten kapazitiven Sensor.

In DE-19521129 ist ein kapazitiver Sensor zur berührungsfreien Abtastung von Etiketten beschrieben, die auf einem Träger mit gegenseitigem Abstand angeordnet sind. Der Sensor weist zwei nebeneinander liegende Kondensatorelemente mit jeweils einem Luftspalt zur Aufnahme des Trägers auf, welche gegenüber einer auf der anderen Seite des Luftspaltes angeordneten Gegenelektrode angeordnet sind. Die an die Erfassungselektroden und die Gegenelektrode angeschlossene Auswerteschaltung umfaßt ein für jedes Kondensatorelement eigenes Zeitglied mit nachgeschaltetem Tiefpaß, wobei die Ausgänge der Tiefpässe einem Differenzverstärker zugeführt werden. Die Zeitglieder werden über einen Oszillator zeitversetzt getriggert.

Dieser Sensor hat den Nachteil, daß er nur für einen begrenzten Dickenbereich des Trägers eingesetzt werden kann.

Demgegnüber liegt die Aufgabe zugrunde, die eingangs genannte Einrichtung zu verbessern.

Die Lösung der genannten Aufgabe gelingt nach der Erfindung dadurch, daß zwischen den Sensor und die Auswerteschaltung ein Regelkreis geschaltet ist, welcher eingangsseitig jeweils über einen eigenen Kanal mit der ersten und der zweiten Erfassungselektrode verbunden ist, aus den von den ErFassungselektroden abgenommenen Signalen einen Mittelwert als Istsignal bildet, und aus dessen Vergleich mit einem vorgegebenen Sollwertsignal ein Stellsignal bildet, das ein dem Sensor zugeführtes Spannungssignal steuert. Die Erfindung bringt den Vorteil, daß die Spaltweite keinen Einfluß mehr hat auf die Erfassung von elektrisch wirksamen Unregelmäßigkeiten an einem insbesondere bandförmigen Gegenstand, also beispielsweise zur Erfassung von Etiketten auf einem Träger. Daher kann mit der erfindungsgemäßen Einrichtung die Spaltweite zwischen 0,2 mm und einem Wert ohne Einfluß auf die Signalauswertung verändert werden, der nur durch die Auslegung des Regelkreises begrenzt ist und beispielsweise 30 mm betragen kann.

Zur Verwendung in der erfindungsgemäßen Einrichtung ist ein kapazitiver Sensor besonders günstig, wenn jede der beiden Erfassungselektroden von einer mit Bezugspotential, beispielsweise Masse, verbundenen Schirmelektrode allseits mit geringem Abstand umgeben ist. Dadurch wird der Einfluß von Randfeld-Inhomogenitäten an den Erfassungselektroden auf das Erfassungsergebnis weitgehend unterdrückt.

Im übrigen sind besondere Ausgestaltungen der Erfindung Gegenstand der Unteransprüche, die zahlreiche, in der nachfolgenden Beschreibung erläuterte Verwendungsmöglichkeiten der Erfindung eröffnen.

Die Erfindung wird nachstehend anhand der in der beigefügten Zeichnung dargestellten Ausführungsbeispiele im einzelnen beschrieben. Es zeigen:
- Fig. 1: ein schematisches Blockdiagramm einer ersten Ausführungsform der Erfindung;
- Fig. 2: einen schematischen senkrechten Schnitt durch Teile des Sensors;
- Fig. 3: eine schematische Darstellung zur Erläuterung der Etikettenerfassung mit der Einrichtung nach Fig. 1;
- Fig. 4: eine weitere Ausführungsform der Erfindung, insbesondere des Sensors;
- Fig. 5: eine dritte Ausführungsform der Erfindung mit verändertem Sensor;

- Fig. 6: eine schematische Darstellung der Auswertemöglichkeit für die Einrichtung nach Fig. 5 und
- Fig. 7: ein schematisches Schaltungsdiagramm einer weiteren Ausführungsform.

Zur Erfassung von elektrisch wirksamen Unregelmäßigkeiten in oder auf einem bandförmigen Träger weist ein im einzelnen nicht dargestelltes Sensorgehäuse einen Spalt 7 der Weite b auf, durch den der Träger in Vorschubrichtung s hindurchgeschoben werden kann. An der Unterseite der Spaltbegrenzung ist eine Bühne als Auflage für den Träger befestigt, welche eine flächige Gegenelektrode 2 aus einem elektrisch leitfähigen Werkstoff eines im Ganzen mit 1 bezeichneten kapazitiven Sensors dargestellt und gegenüber dem Sensorgehäuse elektrisch isoliert ist. Diese Bühne kann auch integrierter Bestandteil einer Maschine bzw. Anlage sein und leitend mit dieser verbunden sein.

An der der Unterseite gegenüberliegenden Oberseite der Spaltbegrenzung ist eine elektrisch isolierende Trägerplatte 5 im wesentlichen parallel zur Bühne befestigt, auf welcher gegeneinander isolierte Erfassungselektroden 10, 20 aus gleich langen, gleich breiten, zueinander und zur Gegenelektrode 2 parallelen und um den Abstand a beabstandeten Streifen aufgebracht sind. Auf der Trägerplatte 5 ist jede Erfassungselekrode 10, 20 von einer Schirmelektrode 4 allseits mit geringem Abstand, insbesondere auch in dem Zwischenraum a zwischen den beiden Erfassungselektroden 10, 20 mit dem Streifen 6, umgeben. Die Schirmelektrode ist ein einteiliges Gebilde, aus welchem die Flächenbereiche für die Erfassungselektroden ausgeschnitten sind. Da die Schirmelektrode 4 mit den Flächenstücken 6, 8, 9 sowie die beiden Erfassungselektroden 10, 20 auf dem isolierenden Träger 5 nebeneinander in einer gemeinsamen Ebene angeordnet sind, entsteht zwischen der Schirmelektrode 4 einschließlich ihrer Teile 6, 8, 9 und der Gegenelektrode 2 ein im wesentlichen homogenes elektrisches Feld, wenn an die Schirmelektrode einerseits und die Gegenelektrode andererseits Spannung angelegt wird. Dabei wird an die Schirmelektrode 4 das Bezugs- (Masse-) Potential angelegt, das identisch mit dem Bezugs- (Masse-) Potential der Auswerteschaltung ist. Die Erfassungselektroden 10, 20 werden entsprechend dem im Spalt 7 befindlichen, elektrisch bzw. dielektrisch wirkenden Material auf ein höheres Potential angehoben, der Feldverlauf unter den Erfassungselektroden ist im wesentlichen homogen und eindeutig durch den Einfluß der Schirmelektrode begrenzt und entkoppelt.

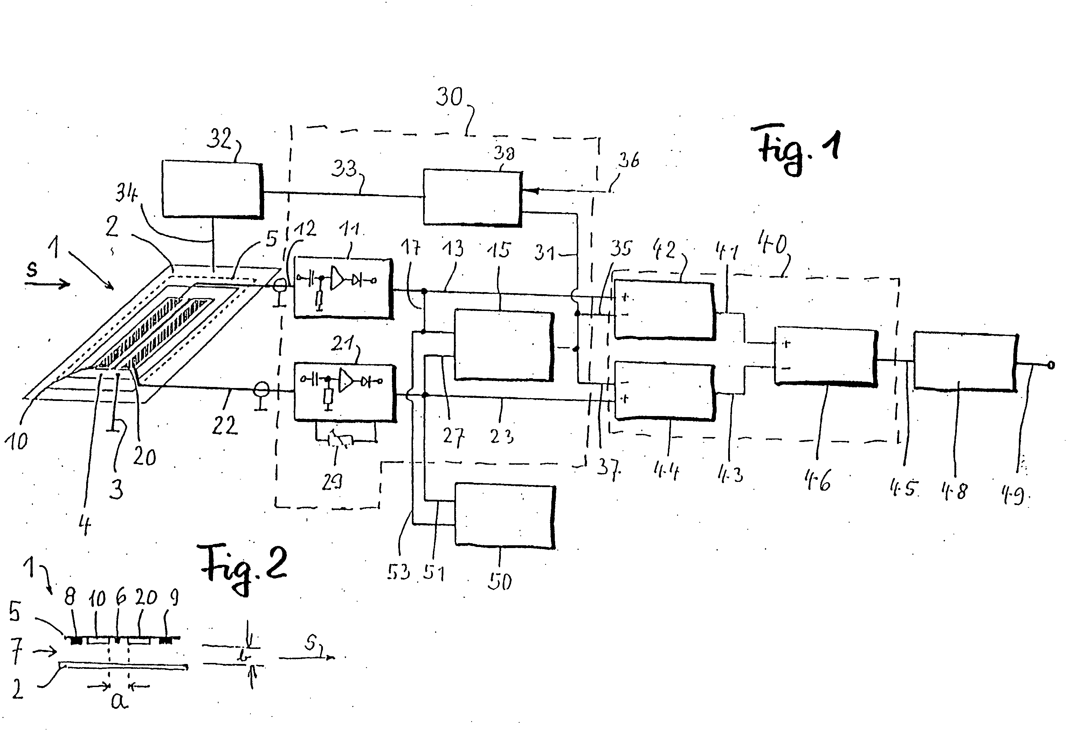

An den Sensor 1 ist ein in Fig. 1 gestrichelt umrandeter Regelkreis 30 angeschlossen, der aus den von den Erfassungselektroden 10, 20 aufgenommenen Signalen einen Mittelwert als Istwertsignal bildet und dieses mit einem vorgegebenen, auf Leitung 36 anstehenden Sollwertsignal vergleicht. Ein aus dem Vergleichsergebnis gebildetes Stellsignal auf Leitung 33 steuert die an den Sensor 1 angelegte Spannung.

Im einzelnen ist die Seele eines Koaxialkabels 12 mit der in Vorschubrichtung s vorderen Erfassungselektrode 10 verbunden und führt in einen ersten Kanal 11, welcher gemäß dem in Fig. 1 eingezeichneten Ersatzschaltbild im wesentlichen einen Verstärker mit nachgeschaltetem Gleichrichter enthält. Das verstärkte gleichgerichtete Ausgangssignal aus dem Kanal 11 gelangt über Leitung 17 auf einen Eingang eines Mittelwertbilders 15.

Die Seele eines weiteren Koaxialkabels 22 ist mit der in Vorschubrichtung s hinteren Erfassungselektrode 20 verbunden und führt in einen mit dem Kanal 11 identischen Kanal 21, der ebenfalls einen Signalverstärker aufweist, der zu dem Signalverstärker aus dem Kanal 11 über einen Stellwiderstand 29 auf Identität abgeglichen werden kann. Das im Kanal 21 verstärkte und gleichgerichtete Ausgangssignal wird einem zweiten Eingang des Mittelwertbilders über Leitung 27 zugeführt. Der im Mittelwertbilder 15 aus den beiden Eingangssignalen auf Leitungen 17, 27 gebildete Mittelwert erscheint als Istwertsignal auf der Ausgangsleitung 31, welche in einen Eingang eines Regelverstärkers 38 führt. Der Regelverstärker 38 bildet aus dem aufgenommenen Istwertsignal und dem ihm über Leitung 36 zugeführten Sollwertsignal ein Stellsignal auf der Ausgangsleitung 33 für einen NF-Wechselspannungsgenerator 32, der auch ein HF-Generator sein kann. Das über Leitung 34 an die Gegenelektrode 2 angelegte Ausgangsspannungssignal des Generators 32 wird in seiner Amplitude und/oder Frequenz vom Stellsignal auf Leitung 33 gesteuert. Die Amplitude kann beispielsweise 10 Vₛₛ betragen.

Die soweit beschriebene Einrichtung hat zunächst den Vorteil, daß das zwischen der Gegenelektrode 2 und jeder der beiden Erfassungselektroden 10, 20 ausgebildete elektrische Feld nahezu homogen ist und seine Inhomogenitäten, die sonst an den Kanten der Erfassungselektroden 10, 20 auftreten würden, zu vernachlässigen sind. Dies wird erreicht durch die erwähnte Einbettung der Erfassungselektroden 10, 20 in die sie allseits umgebende, auf Bezugspotential liegende Schirmelektrode 4.

Ferner hat die soweit beschriebene Einrichtung den Vorteil, daß die Spaltweite b in weiten Grenzen verändert werden kann, ohne daß der Regelkreis 30 einer NachJustierung, Einstellung oder eines sonstigen manuellen Eingriffs bedürfte.

Denn solange die Dielektrizitätskonstante ε über die gesamte in Vorschubrichtung s genommene Länge des Spaltes 7 homogen ist, entstehen bei einer bestimmten Frequenz oder Amplitude des Ausgangssignals des Generators 32 auf den Leitungen 12 und 22 gleich große Signale, die nur in ihrer absoluten Größe, nicht jedoch von ihrer Relation zueinander von der Spaltweite b abhängen. Unabhängig von der Spaltweite b wird daher stets das auf Leitung 31 stehende Istsignal durch das Stellsignal auf Leitung 33 auf das Sollwertsignal auf Leitung 36 geregelt.

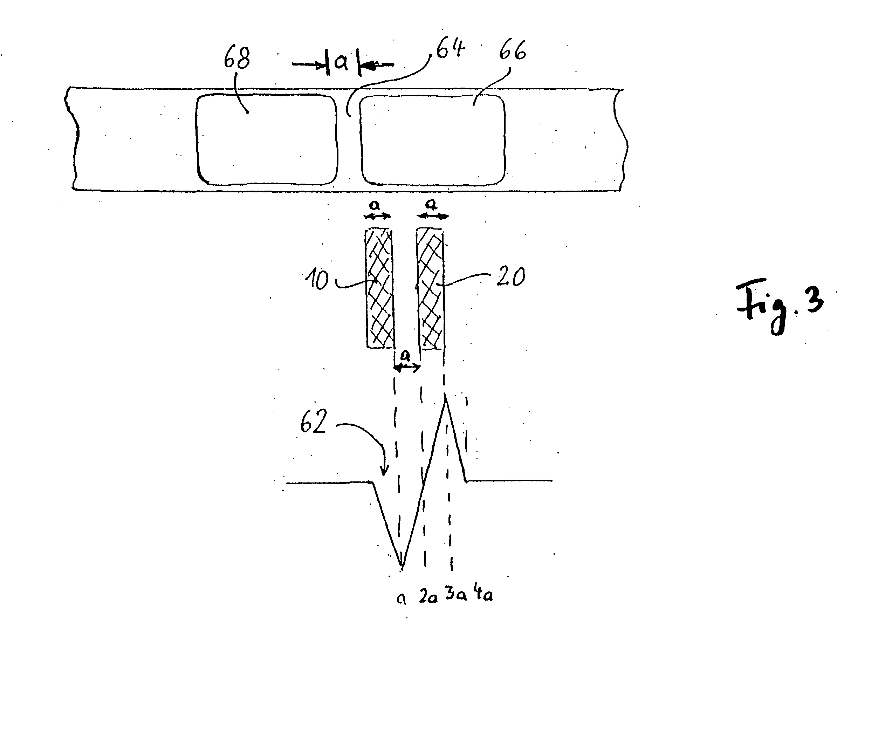

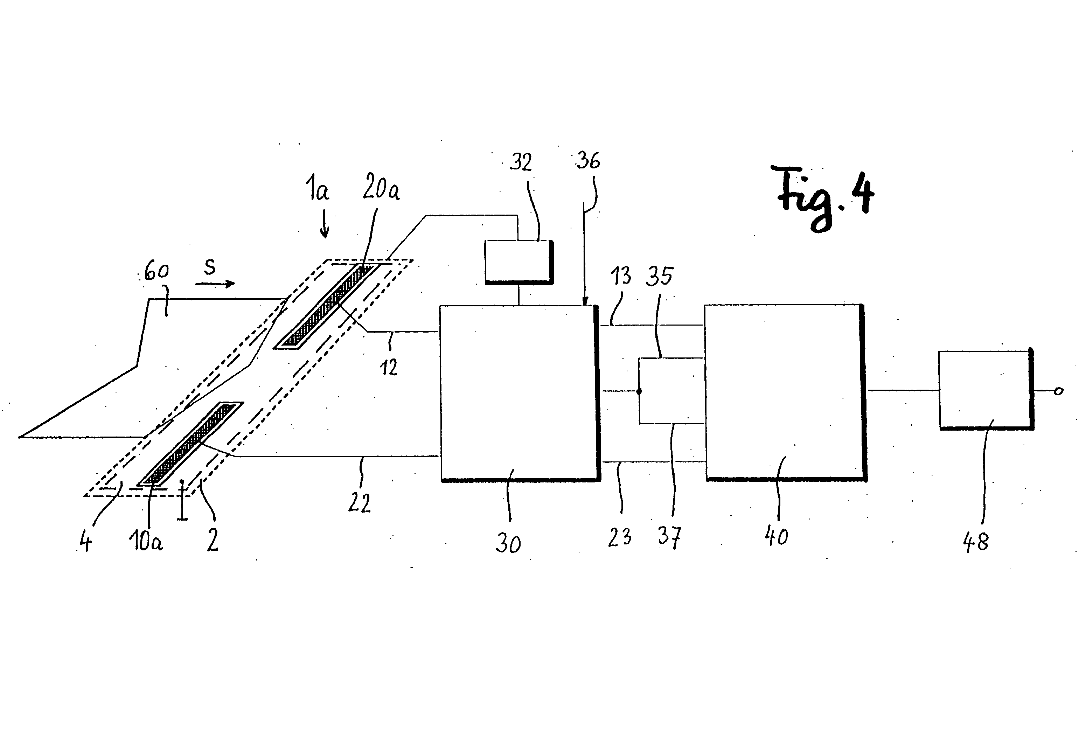

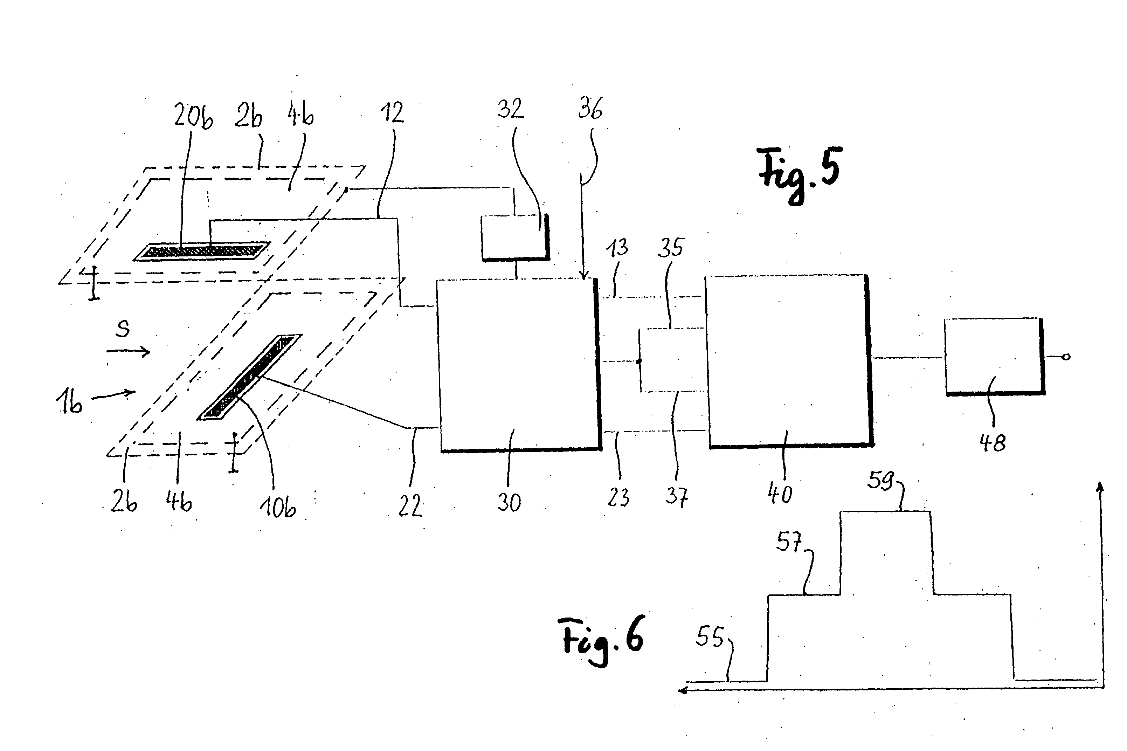

Die gleichen Verhältnisse würden sich ergeben, wenn die beiden Erfassungselektroden 10, 20 in Vorschubrichtung s nicht hintereinander, wie in Fig. 1 dargestellt, sondern fluchtend nebeneinander gemäß Fig. 4 auf der Trägerplatte 5 angeordnet wären.

Der aus den beiden Kanälen 11, 21, dem Mittelwertbilder 15 und dem Regelverstärker 38 gebildete Regelkreis 30 arbeitet wie folgt: Wird in den Spalt 7 ein Gegenstand in Vorschubrichtung s soweit hineingeschoben, daß seine Vorderkante im Bereich a unter dem Zwischenstreifen 6 der Schirmelektrode 4 liegt, verändert sich die Dielektrizitätkonstante für den aus der ersten Erfassungselektrode 10 und der Gegenelektrode 2 gebildeten Kondensator relativ zur Dielektrizitätskonstanten für den aus der zweiten Erfassungselektrode 20 und der "Gegenelektrode 2 bestehenden Kondensator. Für die Erläuterung der Wirkung des Regelkreises 30 sei angenommen, daß sich die Dielektrizitätskonstante für die erste Erfassungselektrode 10 erhöht. Dadurch erhöht sich der Pegel des Signals auf Leitung 12 relativ zu demjenigen auf Leitung 22, der noch immer auf dem Sollwertpegel liegt. Die Folge ist ein Anstieg des Mittelwertsignals auf Leitung 31 über das Sollwertsignal auf Leitung 36. Daraufhin bewirkt das vom Regelverstärker 38 abgegebene Stellsignal auf Leitung 33 eine Herabsetzung der Amplitude oder der Frequenz des Ausgangssignals aus dem Generator 32 auf Leitung 34. Diese Herabsetzung führt zu einer Erniedrigung sowohl des Signalpegels auf Leitung 12 wie auch des Signalpegels auf Leitung 22, wobei der absolute Betragsunterschied der beiden Signale auf den Leitungen 12 und 22 jedoch gleich bleibt. Der Mittelwert auf Leitung 31 sinkt daher. Die Regelung setzt sich fort solange, bis der Mittelwert auf Leitung 31 wieder dem Sollwert auf Leitung 36 entspricht. Die beiden Signalpegel auf Leitungen 13 und 23 liegen dann symmetrisch zum Mittelwert 31. Die drei Signale auf den Leitungen 13, 23 und 31 werden für die nachgeschaltete Auswerteschaltung 40 bereitgestellt.

Der Regelkreis erzeugt also bei Erfassung eines Gegenstandes durch die erste Erfassungselektrode 10 dann, wenn der Gegenstand die zweite Erfassungselektrode 20 noch nicht erreicht hat, auf der Ausgangsleitung 13 einen Signalpegel von +ΔU und auf der Ausgangsleitung 23 einen Signalpegel -ΔU, jeweils relativ zum Sollwert = Mittelwert auf Leitungen 31, 36 für die anschließende Signalauswertung in der Schaltung 40.

An den Regelkreis 30 ist eine im Ganzen mit 40 bezeichnete Auswerteschaltung angeschlossen, welche zwei parallel geschaltete Differentialverstärker 42, 44 sowie einen nachgeschalteten weiteren Differentialverstärker 46 umfaßt.

Der Differentialverstärker 42 nimmt an einem positiven Eingang das Ausgangssignal aus Kanal 11 über Leitung 13 und am anderen negativen Eingang das Istsignal über eine Zweigleitung 35 zur Leitung 31 auf. Die Ausgangsleitung 41 des "Differentialverstärkers 42 führt zu einem Eingang des weiteren Differentialverstärkers 46.

Der Differentialverstärker 44 nimmt an seinem negativen Eingang über eine Zweigleitung 37 von der Leitung 31 das Istwertsignal sowie an seinem positiven Eingang über eine Zweigleitung 23 von der Leitung 27 das aus dem Kanal 21 kommende Signal auf und bildet auf Leitung 43 ein Ausgangssignal, welches dem weiteren Differentialverstärker 46 zugeführt wird. An die Ausgangsleitung 45 des weiteren Differentialverstärker 46 kann, wie dargestellt, noch ein Komperator 48 als Signalformer angeschlossen sein, der das auf Leitung 45 stehende Signal in seiner Höhe triggert und in dieser Form auf seiner Ausgangsleitung 49 bereitstellt.

Der Differentialverstärker 42 bildet an seinem Ausgang 41 aus dem Signal +ΔU ein Ausgangssignal von +U. Der Differentialverstärker 44 bildet aus dem aufgenommenen Signal -ΔU an seiner Ausgangsleitung 43 das Signal -U. Der Differentialverstärker 46 erzeugt daraufhin auf Leitung 45 ein Ausgangssignal von U_{A}=+U-(-U)=2U.

Wenn der Gegenstand weiter durch den Spalt 7 in Richtung s bewegt wird und damit auch unter die zweite Erfassungselektrode 20 gelangt und anschließend bei fortgesetztem Hindurchschieben durch den Spalt 7 seine rückwärtige Kante zuerst unter der ersten Erfassungselektrode 10 und anschließend unter der zweiten Erfassungselektrode 20 vorbei läuft, nimmt das Ausgangssignal auf Leitung 45 die Form zweier gegensinniger Impulse an, deren Breite a enspricht. Figur 3 erläutert den Grenzfall für einen Etikettenabstand im Verhältnis zum Streifenabstand a. mit welchem die größte Empfindlichkeit der Einrichtung noch voll ausgenutzt werden kann. Dies ist bei einem Etikettenabstand gleich a der Fall. Das dargestellte dreieckförmige Ausgangssignal 62 aus dem Differentialverstärker 46 ergibt sich bei Durchlaufen einer Lücke 64 von der in Vorschubrichtung genommenen Breite a zwischen aufeinanderfolgenden Etiketten 66, 68 unter den beiden gleich breiten Erfassungselektroden von jeweils der Breite a. Unterschreitet der Etikettenabstand die Breite a, wird die Empfindlichkeit der Einrichtung nicht mehr voll ausgenutzt, d.h. das dreieckige Ausgangssignal wird kleiner als das dargestellte.

Der absolute Betrag des Sollwerts auf Leitung 36 beeinflußt die Empfindlichkeit der Auswertung und ist auf die Charakteristika des Generators 32 abgestimmt.

Über eine Zweigleitung 53 von der Leitung 17 und über eine Zweigleitung 51 von der Leitung 27 werden die auf den Leitungen 17 und 27 anstehenden Signale einem Komparator 50 mit nicht dargestellter Anzeigeeinrichtung zugeführt. An der Anzeigeeinrichtung kann abgelesen werden, ob Signalsymmetrie vorliegt oder durch Abgleich mit dem Potentiometer 29 noch hergestellt werden muß. Dadurch können Ungenauigkeiten in der Parallelität der die Erfassungselektroden 10, 20 enthaltenen Ebene zu der Ebene der Gegenelektrode 2, wie sie sich beispielsweise bei mechanischer Verstellung der Spaltweite b ergeben können, in ihrem Einfluß auf die Signalsymmetrie ausgeglichen werden. Der Komparator kann natürlich auch an anderer Stelle der Schaltung vorgesehen sein, zum Beispiel am Ausgang des Differenzverstärkers 46 gegenüber dem Bezugspotential.

Die vorstehend erläuterte Einrichtung kann mit besonderem Vorteil zur Erfassung von Etiketten auf einem bandförmigen Träger benutzt werden. Der Etikettenabstand kann in der Größenordnung von 1mm liegen. Die Spaltweite hat keinen Einfluß auf die Etikettenerfassung und kann zwischen etwa 0,2 mm und 30 mm gewählt werden, wobei der obere Grenzwert durch die Eigenschaften des Generators 32 bestimmt ist.

Wird die beschriebene Einrichtung dazu benutzt, die genaue Position der Vorderkante eines Etiketts auf einem bandförmigen Träger zu bestimmen, arbeitet die Einrichtung zuverlässig für Trägergeschwindigkeiten bis zu etwa 5 m/s. Wird die Einrichtung für die Zählung von Etiketten verwendet, gestattet sie die Erfassung von 5...10.000 Etiketten pro Sekunde bei entsprechend höherer Trägergeschwindigkeit.

Bei entsprechend eingestellter Empfindlichkeit der Auswertung erlaubt die beschriebene Einrichtung die Erkennung auch anderer Unregelmäßigkeiten auf einem durch den Spalt 7 vorgeschobenen Träger, beispielsweise Leimstreifen, den Beginn aufgeklebter Folien oder Holzfasern in Papier.

Der beschriebene Regelkreis 30 sowie die Auswerteschaltung 40 lassen sich auch für die Feststellung verwenden, ob ein den Spalt 7 durchlaufender bandförmiger Träger stets gleiche Mitten-Lage behält oder seitlich ausweicht. Dazu dient ein modifizierter Sensor 1a, der schematisch in Fig. 4 dargestellt ist. Er unterscheidet sich vom Sensor 1 darin, daß die beiden Erfassungselektroden 10a, 20a in einer Linie quer zur Vorschubrichtung s des Trägers 60 fluchtend angeordnet sind. Läuft der Träger 60 mittig zu den Erfasssungselektroden 10a, 20a, sind beide Dielektrizitätskonstanten gleich, auch wenn die Streifen länger sind als die halbe Trägerbreite. Wenn der Träger 60 seitlich ausweicht, werden beide Dielektrizitätskonstanten ungleich, was zu einem der Größe des Ausweichens proportionalen Ausgangssignal aus der Auswerteschaltung 40 führt.

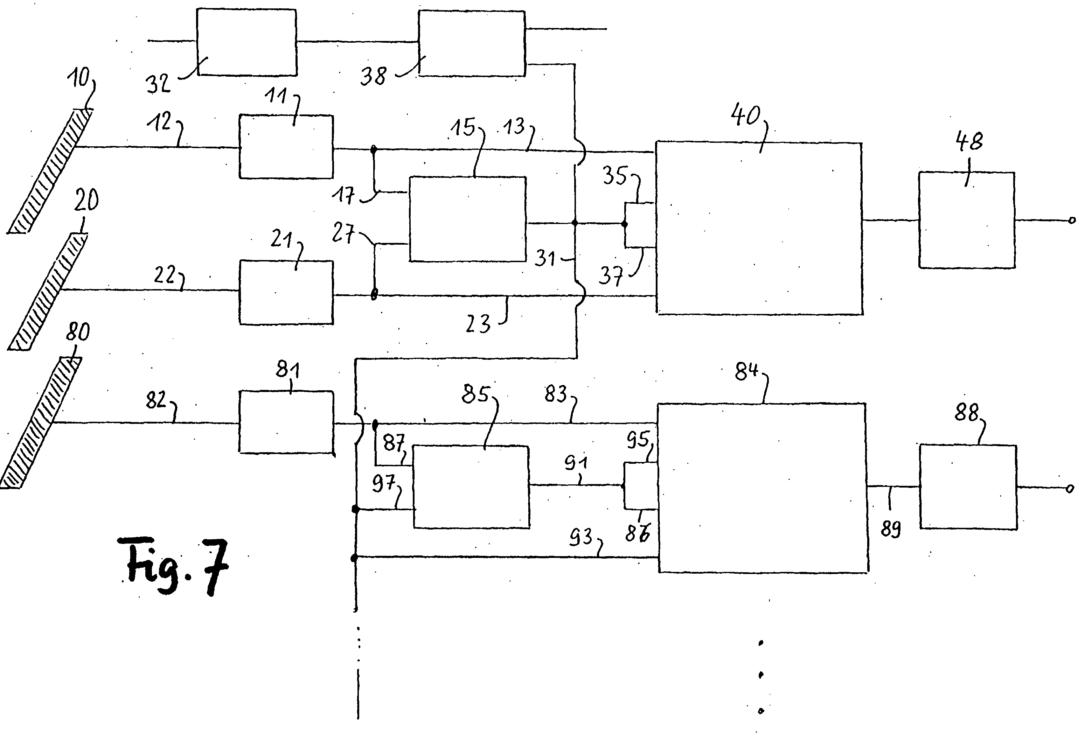

Eine weitere Variante des Sensors 1 erlaubt mit Hilfe des Regelkreises 30 und der Auswerteschaltung 40 die Feststellung, ob in den Spalt 7 nur ein einlagiges Band eingeführt worden ist oder ob und wann eine. doppelte oder mehrfache Lage an Bandmaterial durch den Sensor transportiert wird. Gemäß Fig. 5 ist bei dem Sensor 16 eine Erfassungselektrode 10b quer und die andere Erfassungselektrode 20b beliebig, zum Beispiel parallel zur Vorschubrichtung s neben dem Spalt 7 über einer seitlichen Verlängerung der Gegenelektrode 2b angeordnet. Auf dieser seitlichen Verlängerung kann ein Referenzblatt abgelegt werden, sodaß im Kondensator aus Erfassungselektrode 20b und Gegenelektrode 2b eine bestimmte Referenz-Dielektrizitätskonstante herrscht. Werden dann unter der Erfassungselektrode 10b nacheinander Einzelblätter durchgeschoben, liegt dort die gleiche Referenz-Dielektrizitätskonstante vor. Enthält dagegen der Spalt 7 kein Blatt oder werden durch diesen zwei aufeinanderliegende . Blätter hindurchgefördert, verändert sich die dort herrschende Dielektrizitätskonstante bezüglich der Referenz-Dielektrizitätskonstanten entsprechend, sodaß ein Ausgangssignal aus der Auswerteschaltung 40 etwa gemäß Figur 6 festzustellen ist. Liegt dieses Ausgangssignal auf dem untersten Pegel 55, liegt kein Blatt unter der Erfassungselektrode 10b. Der mittlere Signalpegel 57 zeigt an, daß ein Blatt, der doppelt so hohe Pegel 59 bedeutet, daß zwei aufeinanderliegende Blätter sich unter der Erfassungselektrode 10b befinden.

Wie erläutert ermöglicht die vorstehend im Zusammenhang mit Fig. 1 beschriebene Einrichtung beispielsweise die Erfassung des Anfangs und des Endes eines durch den Spalt bewegten Gegenstandes. Um zusätzlich auf dem erfaßten Gegenstand beispielsweise das Vorliegen einer Leimraupe an vorbestimmter Stelle auf dem Gegenstand festzustellen, wird die beschriebene Schaltung zweckmäßig kaskadiert, indem die Schaltungsanordnung beispielsweise nach Fig. 1 um eine oder mehrere zusätzliche Kanäle erweitert wird. So zeigt Fig. 7 eine weitere Erfassungselektröde 80, die über eine Leitung 82 mit einem Eingang eines weiteren Kanals 81 verbunden ist. Der weitere Kanal 81 ist auf Identität mit den Kanälen 11 und 21 abgeglichen. Die Ausgangsleitung 83 des Kanals 81 führt zu einem Eingang einer Auswerteschaltung 84. Von der Leitung 83 führt eine Zweigleitung 87 zu einem Eingang eines Mittelwertbildners 85, dessen anderer Eingang 97 von der Istsignalleitung 31 abgenommen ist. Die Ausgangsleitung 91 des Mittelwertbildners 85 verzweigt sich zu Eingangsleitungen 95 und 86 einer weiteren Auswerteschaltung 84, die den Eingangsleitungen 35 und 37 für die Auswerteschaltung 40 entsprechen. Schließlich führt eine Leitung 93 von der Ist-Signalleitung 31 zu einem weiteren Eingang der Auswerteschaltung 84, welche der Leitung 23 entspricht. Die Auswerteschaltung 84 ist demnach identisch aufgebaut wie die Auswerteschaltung 40 und bedient über ihre Ausgangssignalleitung 89 einen nachgeschalteten Signalformer 88, der dem Komparator 48 entspricht.

Befindet sich daher gleiches Material unter der zusätzlichen Erfassungselektrode 80 wie unter den Erfassungselektroden 10 und 20, so haben die Auswerteschaltugen 40 und 84 das Ausgangssignal Null. Weichen die Materialeigenschaften unter der zusätzlichen Erfassungselektrode 80 von denen unter deren Erfassungselektroden 10, 20 ab, so werden diese Abweichungen auf die Ausgangssignale der zusätzlichen Auswerteschaltung 84 abgebildet. Damit kann das Auftreten einer Leimspur, von Ausstanzungen und dergleichen auf einem Träger überwacht werden.

Es liegt im Rahmen der Erfindung mehrere zusätzliche Erfassungselektroden mit nachgeschalteten Einheiten entsprechend vorstehender Erläuterung vorzusehen, um beispielsweise mehrere Leimspuren oder dergleichen auf einem Träger festzustellen.

## Patentansprüche

1. Einrichtung zur Erfassung von elektrisch wirksamen Unregelmäßigkeiten an oder in einem insbesondere bandförmigen Gegenstand, mit einem kapazitiven Sensor, bei welchem an einer Seite eines Spaltes zum Durchführen des Gegenstandes in einer Ebene zwei gegeneinander elektrisch isolierte flächige Erfassungselektroden und auf der gegenüberliegenden Seite des Spaltes eine flächige Gegenelektrode angeordnet sind, wobei die Gegenelektrode und die Erfassungselektroden an eine Auswerteschaltung angeschlossen sind, **dadurch gekennzeichnet, dass** zwischen die Auswerteschaltung (40) und den Sensor (1) ein Regelkreis (30) geschaltet ist, welcher eingangsseitig über jeweils einen eigenen Kanal (11, 21) mit der ersten Erfassungselektrode (10) und der zweiten Erfassungselektrode (20) verbunden ist, aus den von den Erfassungselektroden abgenommenen Signalen einen Mittelwert als Istsignal (auf Leitung 31) bildet und aus dessen Vergleich mit einem vorgegebenen Sollwertsignal (auf Leitung 36) ein Stellsignal bildet, das ein dem Sensor (1) zugeführtes Spannungssignal steuert.

2. Einrichtung nach Anspruch 1, **dadurch gekennzeichnet, dass** jede der beiden Erfassungselektroden (10, 20) von einer mit einem Bezugspotential verbundenen Schirmelektrode (4, 6, 8, 9) umgeben ist.

3. Einrichtung nach Anspruch 2, **dadurch gekennzeichnet, dass** die Gegenelektrode (2) mit einer variablen Spannungsquelle (32) verbunden ist.

4. Einrichtung nach einem der vorstehenden Ansprüche, **dadurch gekennzeichnet, dass** dem Regelkreis (30) ein NF- oder HF-Generator (32) zugeordnet ist, dessen Steuereingang das Stellsignal aufnimmt und dessen Ausgangssignal (das Spannungssignal) in der Amplitude und/oder der Frequenz durch das Stellsignal steuerbar ist.

5. Einrichtung nach einem der vorstehenden Ansprüche, **dadurch gekennzeichnet, dass** das Spannungssignal der Gegenelektrode (2) zugeführt ist.

6. Einrichtung nach einem der vorstehenden Ansprüche, **dadurch gekennzeichnet, dass** durch den Regelkreis (30) das Istsignal sowie die von den beiden Kanälen (11, 21) gebildeten Signale der Auswerteschaltung (40) bereitgestellt werden.

7. Einrichtung nach einem der vorstehenden Ansprüche, **dadurch gekennzeichnet, dass** die beiden Erfassungselektroden gleich lange Streifen sind, von denen wenigstens einer sich quer zur Vorschubrichtung (s) des Gegenstandes erstreckt.

8. Einrichtung nach Anspruch 7, **dadurch gekennzeichnet, dass** die beiden Streifen gleich breit sind.

9. Einrichtung nach einem der Ansprüche 7 oder 8, **dadurch gekennzeichnet, dass** die beiden Streifen in einem vorgegebenen Abstand (a) parallel zueinander angeordnet sind.

10. Einrichtung nach einem der Ansprüche 7 oder 8, **dadurch gekennzeichnet, dass** die beiden Streifen in einem vorgegebenen Abstand quer zueinander angeordnet sind (Fig. 5), wobei sich einer der Streifen in Vorschubrichtung (s) des Gegenstandes erstreckt.

11. Einrichtung nach einem der Ansprüche 7 oder 8, **dadurch gekennzeichnet, dass** die beiden Streifen zueinander fluchtend angeordnet sind (Fig. 4).

12. Einrichtung nach einem der vorstehenden Ansprüche, **dadurch gekennzeichnet, dass** die beiden Kanäle (11, 21) elektrisch identisch aufgebaut und abgestimmt sind.

13. Einrichtung nach einem der vorstehenden Ansprüche, **dadurch gekennzeichnet, dass** die Auswerteschaltung (40) zwei parallel geschaltete Differentialverstärker (42, 44) aufweist, von denen einer (42) einen positiven Signalhub aus dem Regelkreis (30) aufnimmt und einen positives Ausgangssignal erzeugt und der andere (44) einen negativen Signalhub aus dem Regelkreis (30) aufnimmt und ein negatives Ausgangssignal bildet, und dass den beiden Differentialverstärkern (42, 44) ein weiterer Differentialverstärker (46) nachgeschaltet ist, der aus dem positiven und dem negativen Ausgangssignal ein verstärktes Ausgangssignal bildet.

14. Einrichtung nach einem der vorstehenden Ansprüche, **dadurch gekennzeichnet, dass** der Auswerteschaltung (40) ein Signalformer (48) nachgeschaltet ist.

15. Einrichtung nach einem der vorstehenden Ansprüche, **gekennzeichnet durch** einen Komparator (50) mit Anzeigeeinrichtung zum Ausgleich von Unsymmetrien der erfassten Signale.

16. Einrichtung nach einem der vorstehenden Ansprüche, **dadurch gekennzeichnet, dass** mindestens eine zusätzliche Erfassungselektrode (80) mit nachgeschaltetem zusätzlichen Kanal (81) vorgesehen ist, wobei ein zusätzlicher Mittelwertbildner (85) das Ausgangssignal aus dem zusätzlichen Kanal (81) sowie aus der Ist-Signalleitung (31) aufnimmt und den erfassten Mittelwert einer weiteren Auswerteschaltung (84) zuführt.

## Claims

1. Means for detecting electrically active irregularities on or in an object, in particular a band-like object, comprising a capacitive sensor, in which two planar detection electrodes electrically insulated from one another are arranged in a plane on one side of a gap for passage of the object, and a planar opposite electrode is arranged on the opposite side of the gap, the opposite electrode and the detection electrodes being connected to an evaluation circuit, **characterized in that** a control loop (30) which is connected on the input side, via a separate channel (11, 21) in each case, to the first detection electrode (10) and the second detection electrode (20) is connected between the evaluation circuit (40) and the sensor (1), calculates the mean value as an actual signal (on line 31) from the signals taken from the detection electrodes and, from a comparison of said actual signal with a predetermined setpoint signal (on line 36), forms an adjusting signal which controls a voltage signal fed to the sensor (1).

2. Means according to Claim 1, **characterized in that** each of the two detection electrodes (10, 20) is surrounded by a shield electrode (4, 6, 8, 9) connected to a reference potential.

3. Means according to Claim 2, **characterized in that** the opposite electrode (2) is connected to a variable voltage source (32).

4. Means according to any of the preceding Claims, **characterized in that** an LF or HF generator (32) whose control input picks up the adjusting signal and whose output signal (the voltage signal) can be controlled in amplitude and/or frequency by the adjusting signal is coordinated with the control loop (30).

5. Means according to any of the preceding Claims, **characterized in that** the voltage signal is fed to the opposite electrode (2).

6. Means according to any of the preceding Claims, **characterized in that** the actual signal and the signals formed by the two channels (11, 21) are provided to the evaluation circuit (40) by the control loop (30).

7. Means according to any of the preceding Claims, **characterized in that** the two detection electrodes are strips of equal length, at least one of which extends transversely to the feed direction (s) of the object.

8. Means according to Claim 7, **characterized in that** the two strips are equally wide.

9. Means according to either of Claims 7 and 8, **characterized in that** the two strips are arranged parallel to one another at a predetermined distance (a).

10. Means according to either of Claims 7 and 8, **characterized in that** the two strips are arranged transversely to one another at a predetermined distance (Fig. 5), one of the strips extending in the feed direction (s) of the object.

11. Means according to either of Claims 7 and 8, **characterized in that** the two strips are arranged flush with one another (Fig. 4).

12. Means according to any of the preceding Claims, **characterized in that** the two channels (11, 21) have an electrically identical structure and are tuned.

13. Means according to any of the preceding Claims, **characterized in that** the evaluation circuit (40) has two differential amplifiers (42, 44) connected in parallel, one (42) of which picks up a positive signal deviation from the control loop (30) and generates a positive output signal and the other (44) picks up a negative signal deviation from the control loop (30) and forms a negative output signal, and that a further differential amplifier (46) which forms an amplified output signal from the positive and the negative output signal is connected down-circuit of the two differential amplifiers (42, 44).

14. Means according to any of the preceding Claims, **characterized in that** a signal shaper (48) is connected down-circuit of the evaluation circuit (40).

15. Means according to any of the preceding Claims, **characterized by** a comparator (50) having indicating means for compensating asymmetries of the detected signals.

16. Means according to any of the preceding Claims, **characterized in that** at least one additional detection electrode (80) with down-circuit additional channel (81) is provided, an additional signal averager (85) picking up the output signal from the additional channel (81) and from the actual signal line (31) and feeding the recorded mean value to a further evaluation circuit (84).

## Revendications

1. Dispositif de détection d'irrégularités à action électrique sur ou dans un objet notamment en forme de bande, avec un capteur capacitif, deux électrodes de détection planes isolées électriquement l'une de l'autre étant placées d'un côté d'une fente pour le passage de l'objet dans un plan et une électrode complémentaire plane étant placée du côté opposé de la fente, l'électrode complémentaire et les électrodes de détection étant raccordées à un circuit d'évaluation, **caractérisé en ce qu'**un circuit de régulation (30), relié en entrée à la première électrode de détection (10) et à la deuxième électrode de détection (20) à chaque fois par l'intermédiaire d'un canal particulier (11, 21), est branché entre le circuit d'évaluation (40) et le capteur (1), qu'il forme à partir des signaux prélevés aux électrodes de détection une valeur moyenne comme signal réel (sur la ligne 31) et qu'il forme à partir de la comparaison à un signal de valeur de consigne prédéterminé (sur la ligne 36) un signal de réglage qui commande un signal de tension envoyé au capteur (1).

2. Dispositif selon la revendication 1, **caractérisé en ce que** chacune des deux électrodes de détection (10, 20) est entourée par une électrode de protection (4, 6, 8, 9) reliée à un potentiel de référence.

3. Dispositif selon la revendication 2, **caractérisé en ce que** l'électrode complémentaire (2) est reliée à une source de tension variable (32).

4. Dispositif selon l'une des revendications précédentes, **caractérisé en ce qu'**un générateur de basse fréquence ou de haute fréquence (32) est associé au circuit de régulation (30), dont l'entrée de commande reçoit le signal de réglage et dont le signal de sortie (le signal de tension) peut être commandé en amplitude et/ou en fréquence par le signal de réglage.

5. Dispositif selon l'une des revendications précédentes, **caractérisé en ce que** le signal de tension est envoyé à l'électrode complémentaire (2).

6. Dispositif selon l'une des revendications précédentes, **caractérisé en ce que** le signal réel ainsi que les signaux formés par les deux canaux (11, 21) sont fournis via le circuit de régulation (30) au circuit d'évaluation (40).

7. Dispositif selon l'une des revendications précédentes, **caractérisé en ce que** les deux électrodes de détection sont des bandes de même longueur dont au moins l'une s'étend transversalement à la direction de défilement (s) de l'objet.

8. Dispositif selon la revendication 7, **caractérisé en ce que** les deux bandes ont la même largeur.

9. Dispositif selon l'une des revendications 7 ou 8, **caractérisé en ce que** les deux bandes sont disposées parallèlement l'une à l'autre à une distance prédéterminée (a) l'une de l'autre.

10. Dispositif selon l'une des revendications 7 ou 8, **caractérisé en ce que** les deux bandes sont disposées transversalement l'une à l'autre à une distance prédéterminée l'une de l'autre (figure 5), l'une des bandes s'étendant dans la direction de défilement (s) de l'objet.

11. Dispositif selon l'une des revendications 7 ou 8, **caractérisé en ce que** les deux bandes sont disposées dans l'alignement l'une de l'autre (figure 4).

12. Dispositif selon l'une des revendications précédentes, **caractérisé en ce que** les deux canaux (11, 21) ont une structure électrique identique et sont accordés.

13. Dispositif selon l'une des revendications précédentes, **caractérisé en ce que** le circuit d'évaluation (40) comporte deux amplificateurs différentiels (42, 44) branchés en parallèle dont l'un (42) reçoit une amplitude de signal positive provenant du circuit de régulation (30) et produit un signal de sortie positif, et dont l'autre (44) reçoit une amplitude de signal négative provenant du circuit de régulation (30) et produit un signal de sortie négatif, et **en ce qu'**un autre amplificateur différentiel (46) est branché en aval des deux amplificateurs différentiels (42, 44), formant un signal de sortie amplifié à partir du signal de sortie positif et du signal de sortie négatif.

14. Dispositif selon l'une des revendications précédentes, **caractérisé en ce qu'**un dispositif de mise en forme de signal (48) est branché en aval du circuit d'évaluation (40).

15. Dispositif selon l'une des revendications précédentes, **caractérisé par** un comparateur (50). avec dispositif d'affichage pour la compensation de dissymétries des signaux détectés.

16. Dispositif selon l'une des revendications précédentes, **caractérisé en ce qu'**il est prévu au moins une électrode de détection supplémentaire (80) avec canal supplémentaire (81) branché en aval, un dispositif (85) de formation de valeur moyenne supplémentaire recevant le signal de sortie provenant du canal supplémentaire (81) ainsi que celui provenant de la ligne de signal réel (31) et envoyant la valeur moyenne déterminée à un autre circuit d'évaluation (84).
